Europäisches Patentamt

European Patent Office

Office européen des brevets

(11) Publication number : **0 242 234 B1**

# EUROPEAN PATENT SPECIFICATION

(45) Date of publication of patent specification :
**15.01.92 Bulletin 92/03**

(51) Int. Cl.⁵ : **C08F 214/08,** C08F 2/24

(21) Application number : **87303481.3**

(22) Date of filing : **21.04.87**

(54) **Production of Vinylidine chloride copolymer latex.**

(30) Priority : **18.04.86 JP 88319/86**
**18.04.86 JP 88320/86**

(43) Date of publication of application :
**21.10.87 Bulletin 87/43**

(45) Publication of the grant of the patent :
**15.01.92 Bulletin 92/03**

(84) Designated Contracting States :
**DE FR GB**

(56) References cited :
**DE-A- 1 645 385**
**US-A- 4 401 788**

(73) Proprietor : **KUREHA KAGAKU KOGYO**
**KABUSHIKI KAISHA**
**9-11 Horidome-cho 1-chome Nihonbashi**
**Chuo-ku**
**Tokyo 103 (JP)**

(72) Inventor : **Suzuki, Masayasu**
**43-6 Yanagimachi Ushiroda-machi**
**Iwaki-shi Fukushima-ken (JP)**
Inventor : **Adachi, Yoshiaki**
**38-10 Shiroyone-Sakaihara Nakoso-machi**
**Iwaki-shi Fukushima-ken (JP)**
Inventor : **Kobori, Masaki**
**58 Yokomachi Ueda-machi**
**Iwaki-shi Fukushima-ken (JP)**
Inventor : **Kojima, Noboru**
**154-1 Harada Nishiki-machi**
**Iwaki-shi Fukushima-ken (JP)**
Inventor : **Kikuchi, Noriyoshi**
**16-1 Maehara Nishiki-machi**
**Iwaki-shi Fukushima-ken (JP)**

(74) Representative : **Lawrence, Peter Robin**
**Broughton et al**
**GILL JENNINGS & EVERY 53-64 Chancery**
**Lane**
**London WC2A 1HN (GB)**

## Description

This invention relates to processes for producing vinylidene chloride copolymer latex that has good chemical stability and that, when coated as a film, provides good gas impermeability and good resistance to colouration upon exposure to light.

It is known that the inclusion of metals or metal ions in vinylidene chloride copolymer latex results in the copolymer having reduced heat and light stability and having a tendency to become coloured.

The copolymers are often used for melt extrusion and this necessitates products having good heat resistance and light stability. Accordingly it has generally been necessary to avoid contamination by metals and metal ions.

When the copolymer is to be processed by a step involving melting of the copolymer it is generally desirable for the product to have a relatively low melt viscosity and this is generally associated with lower molecular weights. However reducing the molecular weight tends to reduce heat stability.

The need to avoid anionic emulsifiers containing metal ions is unfortunate since such emulsifiers tend to be very effective at controlling the particle size of the latex and at imparting mechanical stability to it. These emulsifiers have been accepted in processes where the copolymer is to be subjected to a heating step that is below the melting temperature, for instance to a heating step that merely causes drying of the latex, since such heating steps do not demand such high heat stability. Nevertheless the inferior heat stability of products made using conventional amounts of anionic emulsifiers is a disadvantage.

In Japanese patent publication Sho 41-14676 (1965) it is proposed to overcome this defect by using non-ionic emulsifier alone. Unfortunately relatively large amounts of non-ionic emulsifier have to be used as the mechanical stability of the latex is poor if the amount is too low. For instance whereas good stability can be achieved using below 3 parts by weight (pbw) anionic emulsifier the amount of non-ionic emuslifier for equivalent stability generally has to be above 5pbw. The inclusion of these large amounts of emulsifier greatly reduces the gas impermeability properties of films made from it and this is highly undesirable since gas impermeability is usually a critical property of vinylidene chloride copolymer films.

Throughout this specification parts by weight (pbw) are parts by dry weight based on 100 parts dry weight of the monomer from which the latex and copolymer are made, unless otherwise specified.

In an attempt at maintaining the good heat and chemical stability associated with the use of non-ionic emulsifier alone whilst avoiding the disadvantages of the use of large amounts of non-ionic emulsifier it has been proposed to use in Japanese patent applications Kokai Sho 57-139136 (1982), 58-84842 (1983), 59-152907 (1984) to use a very small amount of anionic emulsifier and a reduced amount of non-ionic emulsifier. Although such products give improved chemical stability compared with systems using anionic emulsifier alone, the chemical stability is not entirely satisfactory and the heat stability is no better, and may be worse than, when using anionic emulsifier alone.

US-A-4 401 788 relates to a vinylidene chloride copolymer latex prepared by a process comprising first forming a seed latex by polymerising some of the monomer with a proportion of the anionic or nonionic surfactant. The polymerised latex is said to contain from 3 to 5% by weight of nonionic surfactant on a polymer solids basis. DE-A-1 645 385 is concerned with a method of preparing a vinylidene copolymer emulsion by a delayed addition technique, in which a seed polymer is first formed in the presence of either anionic or nonionic surfactant.

There is therefore still an urgent need to devise a method of making vinylidene chloride copolymer that has good heat and chemical stability, that has good light stability against colouration, and that will form a good gas impermeable film. There is also still a need to form such a product by emulsion polymerisation in a latex that has good mechanical stability.

According to the invention a latex of vinylidene chloride copolymer is made by emulsion copolymerisation in a polymerisation zone of 100 pbw monomer mixture comprising vinylidene chloride and copolymerisable monomer in the presence of an emulsifier system and a polymerisation initiator, and the process is characterised in that

the monomer mixture comprises 60 to 94% by weight vinylidene chloride and 6 to 40% by weight copolymerisable monomer,

the emulsion system comprises either 0.5 to 5 pbw non-ionic emulsifier or a blend of 0.03 to 1 pbw anionic emulsifier with non-ionic emulsifier that is present in an amount that is at least 60% by weight of the blend and is from 0.1 to 1.5 pbw, and

the copolymerisation is conducted by adding at least 80% of the monomer mixture substantially continuously and substantially unformly to the polymerisation zone and at least 75% by weight of the emulsifier system and some or all of the initiator are added continuously to the polymerisation zone during the said substantially continuous addition of the monomer mixture.

The process of the invention can easily be, and normally is, carried out to provide a copolymer having a solution viscosity of $\eta_{sp}/c = 0.035 - 0.075$ l/g ($\eta_{sp}$ : specific viscosity, c : solution concentration). Also the process can easily be, and generally is, carried out to give a copolymer that has a methanol extraction value of not more than 50% by weight of the emulsifier employed. Thus, as explained in more detail below, methanol extraction of a 5 μm film cast from the latex and dried removes not more than 50% by weight of the emulsifier system.

The invention also relates to an emulsion copolymerisation process generally using a monomer mixture and an emulsifier system as defined above wherein a seed emulsion polymerisation process is conducted first using not more than 20% by weight of the monomer mixture, not more than 25% by weight of the emulsifier system and not more than 30% by weight of the polymerisation initiator, and the resultant seed latex is then utilised for emulsion copolymerisation of the remainder of the monomer mixture using the remainder of the emulsifier and initiator. Generally these remaining portions of monomer mixture, emulsifier system and polymerisation initiator are added continuously and uniformly and so preferably the seed polymerisation is conducted as a preliminary step to a process according to the invention.

The invention also relates to a process for producing a latex of vinylidene chloride copolymer by emulsion copolymerisation in accordance with described above, wherein the monomer mixture comprises from 60 to 94% by weight of vinylidene chloride, from 0.5 to 10% by weight of methacrylonitrile or acrylonitrile, from 0.5 to 5% by weight of glycidyl methacrylate and from 0 to 25% by weight of a monomer copolymerisable with any one of the above monomers.

The invention is therefore primarily directed to an emulsion polymerisation process of a monomer mixture composed mainly of vinylidene chloride in which predetermined amounts of one or more emulsifiers and one or more polymerisation initiators are added substantially continuously and substantially uniformly at a predetermined rate during substantially continuous and substantially uniform addition of the monomer mixture, and by which a latex of the copolymer having a specific molecular weight ($\eta_{sp}/c$) and a low extraction amount of emulsifier can be produced. The copolymer can have good heat and chemical stability and, in particular, a film obtained by coating the latex can have good stability against light colouration and can give good gas impermeability properties. Accordingly it is very useful in packaging materials such as tobacco and foodstuffs. The latex can have good chemical stability against electrolytes including cationic emulsifiers, and yet the latex includes only a relatively small amount of emulsifier.

The monomer mixture used in the present invention comprises from 60 to 94% by weight, and preferably from 75 to 93% by weight, of vinylidene chloride and from 6 to 40% by weight, preferably from 7 to 25% by weight, of a monomer copolymerisable with vinylidene chloride. If the vinylidene chloride is less than 60% by weight, the resultant copolymer has no substantial crystallinity and has poor gas barrier properties. If it exceeds 94% by weight, the copolymer is liable to crystallise quickly. while in the latex, and as a result is unsatisfactory for the production of a coated film.

Suitable monomers copolymerisable with vinylidene chloride may be selected from methyl acrylate, ethyl acrylate, propyl acrylate, butyl acrylate, 2-ethylhexyl acrylate, octyl acrylate, methylmethacrylate, ethylmethacrylate, glycidyl acrylate, glycidyl methacrylate, acrylonitrile, methacrylonitrile, vinyl chloride, vinyl acetate, acrylic acid, methacrylic acid and itaconic acid.

In a preferred embodiment of the present invention, the monomer mixture comprising from 60 to 94% by weight (preferably from 75 to 93% by weight) of vinylidene chloride, from 0.5 to 10% by weight of methacrylonitrile or acrylonitrile, from 0.5 to 5% by weight of glycidyl methacrylate and from 0 to 25% by weight (preferably from 5 to 15% by weight) of a monomer copolymerisable with vinylidene chloride as described above, is particularly preferable for the following reasons.

Methacrylonitrile or acrylonitrile has the effect of raising Tg of the copolymer and increasing the cohesive force of the copolymer due to its -CN group, thereby further improving the gas barrier properties. However, if the amount is too large, Tg of the copolymer may become sufficiently high that it becomes difficult to form a satisfactory coated film from it.

The presence of epoxy monomers such as glycidyl methacrylate is beneficial because the epoxy group results in improved heat stability. However if the amount is too high it may cause cross linking to such an extent that the latex particles become too hard and so are less suitable for making a satisfactory coated film. When the monomer mixture does include unsaturated epoxy material, namely glycidyl methacrylate, it is best to avoid the use of large amounts of ethylenically unsaturated carboxylic acid such as acrylic, methacrylic or itaconic acid since such materials may cause cross linking reactions with glycidyl methacrylate.

By use of the described monomer mixture containing glycidyl methacrylate and (meth) acrylonitrile in the ranges described above it is possible to obtain from the latex a coated film having particularly good gas barrier properties and light-colouring stability.

The amount of anionic emulsifier in the emulsifier system must not be above 1 pbw (1 part anionic emulsifier per 100 parts by weight of the entire monomer) and should be as low as possible consistent with maintaining the mechanical stability of the latex. If the amount is above 1 pbw, the heat stability of the copolymer may be damaged.

When the amount of anionic emulsifier is above 0.03 pbw adequate stability of the latex can generally be achieved in the presence of a relatively low amount of non-ionic emulsifier, namely 0.1 to 1.5 pbw. The amount of non-ionic emulsifier in this instance is preferably kept below 1.5 pbw as increasing amounts tend to decrease the gas barrier properties of the copolymer. The proportion of non-ionic emulsifier in the blend should be not less than 60% of the blend so as to achieve a satisfactory combination of emulsion and heat stability. If the amount of anionic emulsifier is below 0.03 pbw emulsion stability decreases and it becomes necessary to use an increased amount of non-ionic emulsifier.

When the non-ionic emulsifier is used alone (or with trivially low emounts of anionic emulsifier) the amount must be in the range 0.5 to 5 pbw, preferably 1 to 3 pbw. Again the precise amount should be chosen to be as low as possible consistent with the need to maintain emulsion stability so as to avoid reducing the gas barrier properties. The actual amount will depend in part on the ratio of water to monomers. When the concentration of solids in the latex is small, for instance less than 30%, relatively low amounts of non-ionic emulsifier are satisfactory but even then it is generally necessary for the amount to be at least 0.5 pbw. If the amount of non-ionic emulsifier exceeds 5 pbw then the gas barrier properties are damaged.

As the anionic emulsifier, there can be used, for example, alkyl sulfate ester salt, alkylbenzene sulfonate salt, alkylnaphthalene sulfonate salt, dialkylsulfo succinic acid ester salt, alkyl phosphoric acid ester salt, naphthalene sulfonic acid - formalin sulfonic acid condensate, polyoxyethylene alkyl sulfate ester salt, alkyldiphenyl ether disulfonic acid salt, vinyl sulfonic acid salt and styrene sulfonic acid salt.

Particularly preferred anionic emulsifiers are sodium alkyl diphenyl ether disulfonate, sodium alkyl sulfonate and sodium dodecyl benzene sulfonate.

As the non-ionic emulsifier there can be used, for example, polyoxyethylene alkyl ether, polyoxyethylene alkyl phenol ether, polyoxyethylene fatty acid ester and polyoxyethylene sorbitan fatty acid ester, in which those with HLB ranging from 7 to 20 are preferred.

Referring then to the polymerisation initiator, it is possible to use water-soluble inorganic peroxides, organic peroxides and organic peroxides which are more or less water soluble. Depending on the particular materials, they may be used as a redox type initiator in combination with a reducing agent. Examples of inorganic peroxides are potassium persulfate, sodium persulfate, ammonium persulfate and hydrogen peroxide. Examples of the organic peroxides are t-butyl hydroperoxide, succinic acid peroxide, t-butyl peroxy maleic acid and cumene hydroperoxide. Further, water-soluble azo compound, for example, 2,2'-azobis-(2-amidenopropane) hydrochloride can also be used. Examples of reducing agents usable in combination with these peroxides are sodium hydrogen sulfite, rongalite salt, oxalic acid, maleic acid, hydroquinone, p-oxybenzoic acid, thiourea and ascorbic acid.

The preferred amount of the polymerisation initiator used is usually from 0.02 to 0.2pbw and will be selected depending on the desired molecular weight of the copolymer. It is necessary that all or at least a portion of the polymerisation initiator is added substantially continuously during continuous addition of the monomer mixture. The amount continuously added is preferably within a range from 10 to 30% based on the entire amount of the initiator added.

There are two main types of processes within the scope of the invention. In process (1) the entire amount of the monomer mixture, an emulsifier or a mixture thereof and an initiator can be added continuously and uniformly from the start of the polymerisation. In process (2) a portion of the monomer mixture, an emulsifier or a mixture thereof and a polymerisation initiator are used to conduct polymerisation beforehand (.e.g, as a seed polymerisation) and thereafter the remaining portion of the monomer mixture, an emulsifier or a mixture thereof, and a polymerisation initiator are continuously and uniformly added to an autoclave which has been charged with deionised water.

The emulsifier and polymerisation initiator are preferably added in the form of an aqueous solution.

In process (2) the seed polymerisation is conducted by adding a small amount of monomer mixture, emulsifier system and initiator to water to conduct seed emulsion polymerisation, the amounts of monomer mixture, emulsifier system and initiator preferably being less than 20%, less than 25% and less than 30% by weight, respectively, of the total amount of each of the components that is to be used during the entire polymerisation. It is necessary that during the subsequent substantially continuous addition of monomer mixture at least 75% by weight of the emulsifier system, at least some of the polymerisation initiator and at least 80% by weight of the monomer mixture are added continuously. The composition of the monomer mixture and the emulsifier system may be varied from one part of the process to another. In particular, in process (2) the composition of the monomer mixture and of the emulsifier system, or both, may be different in the seed polymerisation from in the continuous addition.

Method (2) is generally preferred since it is easier to maintain constant the number of polymer particles and it is easier to control the particle size.

If the number of particles is held constant then the polymerisation rate is related to the monomer concentration in the polymer particles and the degree of polymerisation (molecular weight) is also related to the monomer concentration in the polymer particles and is inversely related to the rate at which radicals intrude into the particles. Thus the monomer concentration in the particles and the radical intrusion rate are important factors for controlling the polymerisation rate, the average degree of polymerisation and the distribution of degrees of polymerisation. The rate, the average and the distribution are, in the invention, made more uniform as a result of substantially simultaneously and substantially continuously adding emulsifier system and initiator during substantially continuous addition of the monomer mixture.

For instance if more than 20% by weight of the entire monomer mixture is added at the start together with small amounts of emulsifier and initiator, latex stability cannot be maintained and it is difficult to proceed with the polymerisation.

The continuous addition of the monomers is not only effective for the control of the monomer concentrations in the polymer particles but is also effective for obtaining a copolymer having a uniform composition even if the monomers in the blend have relative reactivity ratios that are greatly different from each other.

If more than 25% of the emulsifier is added at the start or if the remainder is not added substantially continuously during the continuous monomer addition polymerisation is likely to be retarded, the chemical stability of the latex worsened and the methanol extraction value and heat stability of the copolymer worsened. It is thought that if emulsifier is present in too large amount the number of the polymer particles increases and finally damages the chemical stability of the latex. The emulsifier is thought to tend to be temporarily adsorbed close to a surface of the polymer particles and to decrease the monomer intrusion rate or radical intrusion rate into the particles. This gives the undesired effect on the polymerisation rate and the polymerisation degree. It is therefore important to control uniform adsorption of emulsifier to the latex particles during polymerisation so as control the polymerisation rate and the polymerisation degree as well as the uniform addition of the monomer and the initiator. As an index for the uniform addition of an emulsifier, it is desirable that the surface tension of the latex is maintained constant.

If more than half the total amount of polymerisation initiator is added at the start of the polymerisation, the degree of polymerisation at the start is reduced and this causes reduced heat stability and also causes retardation of the polymerisation reaction during the latter stages.

A uniform polymerisation rate and degree can be promoted by utilising a reducing agent in the polymerisation system in order that the initiator instantly forms radicals and in order that there is a substantially constant concentration of radicale throughout the polymerisation.

It is often desirable to add further polymerisation initiator after the continuous addition of the monomer mixture has been completed.

The substantially continuous addition of the monomer is preferably conducted for a period that constitutes at least 50%, and often at least 70% of the total polymerisation time. Often the substantially continuous addition of monomer is conducted over a period of at least five hours and preferably at least eight hours. Often the polymerisation mixture is subjected to post-reaction by being maintained under polymerisation conditions after all the monomer has been added, this post-reaction generally being conducted for a period of at least 10% of the total polymerisation period. The post-reaction is often conducted for at least two hours but generally below six hours. Initiator is often included after the final monomer addition.

Although we say that the monomer must be added substantially continuously and substantially uniformly, and that the emulsifier and initiator must be added substantially simultaneously during the monomer addition, and although this broadly means that there should be additions of substantially constant amounts per unit time, it is of course not essential that there should be absolute continuity or uniformity in addition of the various components and short interruptions and some variations in the rate of addition can be tolerated, although will tend to lead to inferior results.

The polymerisation degree or the molecular weight of the polymer obtained in the present invention are represented by a solution viscosity : $\eta_{sp}/c = 0.035 - 0.075$ l/g ($\eta_{sp}$ : specific viscosity c : solution concentration), more preferably, 0.04 - 0.07 l/g. If the viscosity is lower than 0.035, the heat stability and the light-colouring resistance are poor. If it exceeds 0.075, the copolymer becomes difficult to melt and the heat sealing property is damaged. Particularly, if the contact time with a hot plate upon heat sealing is less than 0.5 second, the heat sealing property is damaged.

The solution viscosity of the copolymer was calculated by measuring the solution viscosity of 4 g/l solution of cyclohexanone at 30°C.

In the present invention, the continuous addition of the monomer mixture, initiator and emulsifier are controlled so as to obtain the polymerisation degree in the required range. The polymerisation temperature can be determined correspondingly, but is generally in the range from 30 to 70°C.

It has further been found surprisingly in the present invention that by adding the monomer mixture, emulsifer and polymerisation initiator simultaneously and continuously to the polymerisation system, more than half of the emulsifier (and, particularly, almost all of the non-ionic emulsifier) is present in such a state that it cannot be extracted from the copolymer through methanol extraction. In particular the methanol extraction rate is less than 50% of the entire emulsifier and when a non-ionic emulsifier alone is used the methanol extraction rate becomes less than 40%. As a result, the chemical stability of the latex is good compared with the conventional latex. It is thought that the non-ionic emulsifier may be grafted to the copolymer as a result of the simultaneous and continuous addition of the monomer, initiator and emulsifier, and particularly by the formation of the initiator radicals in water throughout the process.

Because of such an unusual mode of existence of a non-ionic emulsifier heat stability and gas barrier properties are not adversely affected even with the higher amounts of non-ionic emulsifier that can be used in the invention and even when the non-ionic emulsifier is used in combination with anionic emulsifier. The overall effect of the actual amounts of emulsifier and the method of addition and the consequential non-extractibility of the emulsifier means that the product has good heat stability and gas impermeability. In general, such properties are better than those that have commercially been obtainable prior to the invention.

The particle size of the latex is generally controlled within a range of from 80-200nm (800 to 2,000 Å), for instance by selection of the amount of emulsifier, initiator and monomer at the start of the polymerisation.

Additives such as silica, wax and pigments or cationic surface active agent as an anti-electorstatic agent and alcohols as a surface tension controlling or defoaming agent may also be added to the latex.

The latex car be coated to form a film by conventional coating methods, e.g., on a sheet of paper or a plastic film.

The usefulness of this invention will be described referring to Examples and Comparative Examples, in which % and part means % by weight and parts by weight respectively.

First, the evaluation test method will be explained.

(1) Chemical stability of latex:

1 - 2 drops of latex of 50% solid concentration was added at 20°C to methanol and an aqueous 10% solution of cationic surface active agent (cationic surface active agent : Esocard C-12, manufactured by Lion-Aczo, Co.) respectively, to examine whether the latex is coagulated or not. The state exhibiting an opaque color with no coagulation is judged good.

(2) Methanol Extraction Rate of Emulsifier:

Latex of 50% solid concentration was coated on a biaxially stretched polypropylene film (hereinafter simply referred to as OPP) and dried to form a film of a 5μm thickness in a chamber at 20°C. After drying, only the coated film made from the latex (hereinafter called latex film) was defoliated by using a Cellophane (trade mark) adhesive tape, and a latex film of about 10g was cut into rectangular shape and extracted for 50 hours with a methanol solvent by using a Soxhlet extractor. The extraction amounts were measured after 40 hours and 50 hours and the extraction rate was shown when the both amounts were confirmed to be constant. However, if the amount was not constant at 50 hours, the extraction was continued and the amount was measured every 10 hours until the amount was confirmed to be constant. The methanol extraction rate was expressed by percentage of the amount of emulsifier extracted based on the total amount of the emulsifier used.

(3) Molecular Weight:

The latex was frozen to coagulate, then washed with methanol and dried in a vacuum drier to obtain powder. The powdery specimen was dissolved in cyclohexanone to 4 g/l and the solution viscosity was measured at 30°C to calculate $\eta_{sp}/c$.

(4) Oxygen Permeability:

Urethane resin type adhesives "Takelac A-310" and "Takenate A-3" (manufactured by Takeda Yakuhin Kogyo Co.) were mixed at 15 : 1 ratio as an anchor coating agent (hereinafter simply referred to as AC) and coated on the corona treated surface of OPP of 20 μm thickness so as to obtain 0.3 g/m² of solid content and dried at 80°C for 30 seconds. Then, a latex at 40% solid concentration [silica powder and Sailloid 244 (manufactured by Fuji-Devison Co.) of 0.2 parts by weight based on 100 parts by weight of the resin were added beforehand] was applied on the AC surface to a solid content of 5.0 g/m² and dried at 80°C for 30 seconds.

After drying, it was left at 40°C for 48 hours and then conditioned for 20 hours under 20°C and 90 % RH. The specimen was measured by a MOCON-OX-TRAN 100 type tester (manufactured by Modern) Control Co.) under the condition of 20°C and 90% RH.

(5) Light-coloring Resistance (light-coloring resistance was measured as an index for a heat stability since the parallel relationship is recognized therebetween):

A latex of 50% solid concentration was coated on the corona treated surface of OPP of 20μm thickness to 10 g/m$^2$ of solid content and dried at 80°C for 30 minutes. Then, it was left at 40°C for 48 hours. Then, the specimen was cut into rectangular shape and 10 sheets of the cut specimens were 5 piled up, each coated surface being kept upward. The piled up rectangular specimens were continuously exposed to a sun light over a predetermined time from 10 AM to 3 PM in a fine day. The degree of coloration of the piled up specimens was measured by a color difference meter (model TCA-I, manufactured by Tokyo Denshoku Co.) and expressed in YELLOW INDEX.

EXAMPLE 1:

Deionized water                                                    70 parts

Sodium alkyldiphenyl ether disulfonate

(Newcol 271A, manufactured by Nihon

  Emulsifier Co.)                                                  0.1 part

Polyoxyethylene nonyl phenol ether

(Emulgen 935, manufactured by Kao-Atlas Co.)                      0.2 part

Potassium persulfate                                              0.01 part

Sodium hydrogen sulfite                                           0.01 part

were collectively charged into a glass-lined autoclave equipped with a stirrer and after sufficiently replaced with

nitrogen gas,

Vinylidene chloride                                               9.2 parts

Acrylonitrile                                                     0.2 part

Methylmethacrylate                                                0.6 part

were rapidly added by a pump and after stirring at 45°C for

three hours (seed polymerization), aqueous 1% solution of

sodium hydrogen sulfite                                           6.0 parts

was added and then a mixture of :

Vinylidene chloride                                               69 parts

Acrylonitrile                                                     1.5 parts

Methyl methacrylate                                               4.5 parts

was continuously added at a rate of five parts per one

hour.

Simultaneously, a mixture comprising :

| | |
|---|---|
| Sodium alkyldiphenyl ether disulfonate | 0.3 part |
| Polyoxyethylene nonyl phenol ether | 0.8 part |
| Potassium persulfate | 0.004 part |
| Deionized water | 17.0 parts |

was continuously added at a rate of one part per one hour.

Immediately after the addition of an entire amount of the monomer mixture had been over,

| | |
|---|---|
| aqueous 1% solution of sodium hydrogen sulfite | 2 parts |

was added and then prepared the following monomer mixture :

| | |
|---|---|
| Vinylidene chloride | 13.5 parts |
| Acrylonitrile | 0.6 part |
| Methyl acrylate | 0.6 part |
| Acrylic acid | 0.3 part |

and the mixture was continuously added at a rate of five parts per one hour. After the completion of the addition of the monomer, addition of the emulsifier and the polymerization initiator was also completed. One hour after, a mixture comprising :

| | |
|---|---|
| Potassium persulfate | 0.02 part |
| Sodium hydrogen sulfite | 0.02 part |
| Deionized water | 4.0 parts |

was added and stirred at 45°C for three hours. The latex was tested according to the evaluation test method as described before.

EXAMPLE 2:

Polymerization was conducted with the following composition of the monomer, the emulsifier and the initiator as the initial collective charge :

Initial collective charge

Emulsifier composition

| | |
|---|---|
| Sodium dodecyl benzene sulfonate | 0.2 part |
| Polyoxyethylene sorbitan fatty acid ester | 0.3 part |

Initiator composition

| | |
|---|---|
| Potassium persulfate | 0.015 part |
| Sodium hydrogen sulfite | 0.015 part |

Monomer composition

| | |
|---|---|
| Vinylidene chloride | 9.1 parts |
| Methylmethacrylate | 0.5 part |
| Methacrylonitrile | 0.4 part. |

The following composition of the emulsifier, the initiator end the monomer was added continuously at the initial stage :

| | |
|---|---|
| Sodium dodecylbenzene sulfonate | 0.3 part |
| Polyoxyethylene sorbitan fatty acid ester | 1.2 parts |
| Potassium persulfate | 0.008 part |
| Vinylidene chloride | 68.25 parts |
| Methylmethacrylate | 3.75 parts |
| Methacrylonitrile | 3.0 parts. |

The following composition of the monomer was succeedingly added continuously.

| | |
|---|---|
| Vinylidene chloride | 13.5 parts |
| Methyl acrylate | 0.6 part |
| Acrylonitrile | 0.6 part |
| Acrylic acid | 0.3 part |

Polymerization was conducted in the same manner as in EXAMPLE 1 except for the foregoings to obtain a latex.

EXAMPLE 3:

| | |
|---|---|
| Deionized water | 70 parts |
| Sodium alkyldiphenyl ether disulfonate (Newcol 271A, manufactured by Nihon Nyukazai Co.) | 0.15 part |
| Polyoxyethylene nonyl phenol ether (Emulgen 935, manufactured by Kao-Atlas Co.) | 0.25 part |
| Potassium persulfate | 0.01 part |
| Sodium hydrogen sulfite | 0.01 part |

were collectively charged into a glass-lined autoclave equipped with a stirrer and after sufficiently replaced with nitrogen gas,

| | |
|---|---|
| Vinylidene chloride | 9.0 parts |
| Methylmethacrylate | 0.7 part |
| Acrylonitrile | 0.3 part |

were rapidly added by a pump and after stirring at 45°C for three hours,

| | |
|---|---|
| Aqueous 1% solution of sodium hydrogen sulfite | 6.0 parts |

was added and then a mixture comprising :

| | |
|---|---|
| Vinylidene chloride | 81.9 parts |
| Methyl methacrylate | 2.7 parts |
| Acrylonitrile | 2.7 parts |
| Glycidyl methacrylate | 2.7 parts |

was continously charged at a rate of five parts per one hour.

Simultaneously, a mixture comprising :

11

| | |
|---|---|
| Sodium alkyldiphenyl ether disulfonate | 0.5 part |
| Polyoxyethylene nonyl phenol ether | 0.75 part |
| Potassium persulfate | 0.008 part |
| Deionized water | 18 parts |

was continuously charged at a rate of one part per one hour.

10 hours after initiating the continuous addition, aqueous 1% solution of sodium hydrogen

| | |
|---|---|
| sulfite | 3.0 parts |

was added.

One hour after completing the addition of an entire amount of the monomer, a mixture comprising :

| | |
|---|---|
| Potassium sulfate | 0.02 part |
| Sodium hydrogen sulfite | 0.02 part |
| Deionized water | 4.0 parts |

was added and stirred at 45°C for further three hours to obtain a latex.

EXAMPLE 4:

| | |
|---|---|
| Deionized water | 80 parts |
| Polyoxyethylene nonyl phenol ether | |
| (Emulgen 930, manufactured by Kao-Atlas Co.) | 0.5 part |
| Potassium persulfate | 0.015 part |
| Sodium hydrogen sulfite | 0.01 part |

were charged into a glass-lined autoclave equipped with a stirrer and after sufficiently replaced with nitrogen gas,

| | |
|---|---|
| Vinylidene chloride | 9.0 parts |
| Methylmethacrylate | 0.7 part |
| Methylacrylate | 0.3 part |

were rapidly added by a pump and after stirring at 45°C for three hours (seed polymerization),

| | |
|---|---|
| aqueous 1% solution of sodium hydrogen sulfite | 6.0 parts |

was added and then a mixture of :

| | |
|---|---|
| Vinylidene chloride | 82 parts |
| Methylmethacrylate | 5.5 parts |
| Acrylonitrile | 2.5 parts |

was added at a rate of 10 parts per hour.

Simultaneously with the start of continuous charge of the monomer mixture, the following aqueous solution comprising :

| | |
|---|---|
| Polyoxyethylene nonyl phenol ether | 1.5 parts |
| (Emulgen 930, manufactured by Kao-Atlas Co.) | |
| Potassium persulfate | 0.01 part |
| Deionized water | 7.5 parts |

was prepared and continuously charged at a rate of one part per one hour.

One hour after the completion of charging the monomer mixture, the emulsifier and the aqueous solution of polymerization initiator, a mixture comprsing :
Potassium persulfate          0.01 part

13

Sodium hydrogen sulfite       0.01 part
Deionized water       4.0 parts
was added and stirred at 45°C for further three hours to obtain a latex.

EXAMPLE 5:

Polymerization was conducted in the same procedures as in EXAMPLE 4, except for using the initial charging deionized water of 75 parts and for changing the amounts of the emulsifier and the polymerization initiator to be charged continuously and the addition rate as follows:
A mixture comprising:

```
Polyoxyethylene nonyl phenol ether            4.0 parts

(Emulgen 930, manufactured by Kao-Atlas Co.)

Potassium persulfate                          0.02 part

Deionized water                               14.0 parts

was continuously added at a rate of 2 parts per hour.
```

EXAMPLE 6:

```
Deionized water                               65 parts

Sodium hydrogen sulfite                       0.08 part

were charged into a glass-lined autoclave equipped with a stirrer and after sufficiently replaced with nitrogen gas,

a mixture comprising:

Sodium alkyl diphenyl ether disulfonate       0.60 part

(Newcol 271A, manufactured by Nippon

Nyukazai Co.)

Polyoxyethylene nonyl phenol ether            0.90 part

(Emulgen 930, manufactured by Kao-Atlas Co.)

Potassium persulfate                          0.03 part

Deionized water                               21 parts

was charged continuously at a rate of one part per hour.
```

30 minutes after starting the charge of the mixture, the monomer mixture of the following composition was charged at a rate of 5 parts per hour.
Vinylidene chloride       9.0 parts
Methylmethacrylate       0.5 part
Acrylonitrile       0.3 part

14

Glycidylmethacrylate        0.2 part
    Immediately after the completion of charging the mixture, a mixture comprising:
Vinylidene chloride          81.45 parts
Methylmethacrylate           4.05 parts
Methacrylonitrile            2.7 parts
Glycidylmethacrylate         1.8 parts
was continuously added at a rate of 5 parts per hour. At 10 hours after the start of the charge,

```
aqueous  1%  solution of. sodium hydrogen

sulfite                                      4.0  parts

was added.
```

    One how after the completion of the charge of an entire amount of the monomer mixture, a mixture comprising:
Potassium persulfate         0.02 part
Sodium hydrogen sulfite      0.02 part
Deionized water              4.0 parts
was added and stirred at 45°C for three hows to obtain a latex.

EXAMPLE 7:

    Polymerization was conducted in the same procedures as in EXAMPLE 4 except for changing the monomer mixture as below.

```
Monomers for the seed polymerization

Vinylidene chloride                     9.0 parts

Methylmethacrylate                      1.0 part

Monomers to be charged continuously

Vinylidene chloride                     81 parts

Glycidylmethacrylate                    3.0 parts

Methylacrylate                          6.0 parts
```

EXAMPLE 8:

| | |
|---|---|
| Deionized water | 50 parts |
| Sodium hydrogen sulfite | 0.01 part |

were charged into a glass-lined autoclave equipped with a stirrer and after sufficiently replaced with nitrogen, a mixture comprising:

| | |
|---|---|
| Sodium alkyl diphenyl ether disulfonate | 0.1 part |
| Polyoxyethylene nonyl phenol ether | 0.5 part |
| (Emulgen 930, manufactured by Kao-Atlas Co.) | |
| Potassium persulfate | 0.01 part |
| Deionized water | 15 parts |

was charged continuously at 45°C for one hour. 10 minutes after the start of charging the above mixture, a mixture comprising:

| | |
|---|---|
| Vinylidene chloride | 90 parts |
| Methylacrylate | 7 parts |
| Glycidylmethacrylate | 3 parts |

was started to be charged continuously at a rate of 5 parts per hour.

50 minutes after starting the charge of the monomer mixture, 7 parts of an aqueous 1% solution of sodium hydrogen sulfite was added and, thereafter, a mixture comprising:

| Sodium alkyl diphenyl ether disulfonate | 0.2 part |
| Polyoxyethylene nonyl phenol ether | 1.0 part |
| Potassium persulfate | 0.004 part |
| Deionized water | 19.5 parts |

was added at a rate of one part per hour. One hour after the completion of charging entire amount of the monomer mixture, a mixture comprising:

| Potassium persulfate | 0.02 part |
| Sodium hydrogen sulfite | 0.02 part |
| Deionized water | 4.0 parts |

was added and stirred at 45°C for further three hours to obtain a latex.

EXAMPLE 9:

| Deionized water | 75 parts |
| Longalite salt | 0.1 part |

was charged into a glass-lined autoclave equipped with a stirrer and after sufficiently replaced with nitrogen gas, a mixture comprising:

| Polyoxyethylene nonyl phenol ether (Emulgen 935, manufactured by Kao-Atlas Co.) | 3.0 parts |
| t-butyl hydroperoxide | 0.01 part |
| Deionized water | 18 parts |

was started to be charged continuously at a rate of 2 parts per hour. 30 minutes after the start, the following monomer mixture was charged at a rate of 10 parts per hour:

| Vinylidene chloride | 90 parts |
| Methylmethacrylate | 4 parts |
| Methacrylonitrile | 3 parts |
| Methylacrylate | 3 parts |

One hour after the completion of charging the monomer mixture,

17

t-butyl hydroperoxide    0.02 part
Deionized water    40 parts
were added and stirred at 45°C for 3 hours to obtain a latex.

EXAMPLE 10:

Deionized water                                          70 parts

Sodium alkylsulfonate                                    0.20 part

(Melsolate H, manufactured by Bayer AG)

Polyoxyethylene nonyl phenol ether                       0.30 part

(Emulgen 935, manufactured by Kao-Atlas Co.)

Potassium persulfate                                     0.01 part

Sodium hydrogen sulfite                                  0.01 part

were charged into a glass-lined autoclave equipped with a stirrer and after sufficiently replaced with nitrogen gas, a mixture comprising:

| | |
|---|---|
| Vinylidene chloride | 9.0 parts |
| Methylmethacrylate | 0.7 part |
| Glycidylmethacrylate | 0.3 part |

was rapidly added by a pump at 45°C and after three hours stirring,

| | |
|---|---|
| aqueous 1% solution of sodium hydrogen sulfite | 6.0 parts |

was added and then a mixture comprising:

| | |
|---|---|
| Vinylidene chloride | 67.5 parts |
| Methylmethacrylate | 3.0 parts |
| Methacrylonitrile | 3.0 parts |
| Glycidylmethacrylate | 1.5 parts |

was added at a rate of 5 parts per hour.

Simultaneously, a mixture comprising:

| | |
|---|---|
| Sodium alkyl sulfonate | 0.6 part |
| Polyoxyethylene nonyl phenol ether | 1.0 part |
| Potassium persulfate | 0.008 part |
| Deionized water | 18.0 parts |

was added at a rate of one part per hour. Immediately after the completion of charging the monomer mixture,

| | |
|---|---|
| an aqueous 1% solution of sodium hydrogen sulfite | 2.0 parts |

was added and, succeedingly, a mixture comprising:

| | |
|---|---|
| Vinylidene chloride | 13.5 parts |
| Acrylonitrile | 0.6 part |
| Methylacrylate | 0.9 part |

was added at a rate of 5 parts per hour. After completing the addition of the monomer, the addition of the emulsifier and the polymerization initiator was also stopped. After one hour, a mixture comprising:

| | |
|---|---|
| Potassium persulfate | 0.02 part |
| Sodium hydrogen sulfite | 0.02 part |
| Deionized water | 4.0 parts |

was added and stirred at 45°C for three hours to obtain a latex.

Comparative Example 1:

Polymerisation was conducted by the same procedures as in Example 1 except for the following:
(1) In the initial collective charging, 0.5 part of sodium alkyl diphenyl ether disulfonate were charged instead of 0.1 part of sodium alkyl diphenyl ether disulfonate and 0.2 part of polyoxyethylene nonyl phenol ether.
(2) The emulsifier used was only the anionic emulsifier, and continuous addition of the emulsifier was not conducted during polymerization.
The property of the latex and the property of the copolymer obtained are shown in Table 1.
Since only the anionic emulsifier was used, the latex han poor chemical stability. Further the molecular weight of the obtained copolymer was half as compared with that of Example 1 and the polymer had inferior light-coloring resistance.

Comparative Example 2:

2.5 parts of a nonionic emulsifier were added to the latex obtained in Comparative Example 1 after the polymerization was over. Although the stability of the latex against the cationic emulsifier was improved, the stability against methanol was not improved. Referring to the property of the copolymer, the gas-barrier property and the light-coloring resistance were significantly damaged.

Comparative Example 3:

1.5 parts of a nonionic emulsifier were added to the latex obtained in Comparative Example 1 after the polymerization was over. Since the amount of the nonionic emulsifier was less than that in Comparative Example 2, stability against a cationic emulsifier could not be maintained.

Comparative Example 4:

Polymerization was conducted in the same procedures as in Example 1 except for using 2.5 parts of polyoxyethylene nonyl phenol ether instead of 0.8 part of polyoxyethylene nonyl phenol ether in continuous addition of the emulsifier in Example 1. The polymerization rate was tended to be retarded with an identical amount of the initiator. Since the amount of the nonionic emulsifier used was greater than the range as specified in this invention, although chemical stability of the latex and light-coloring resistance of the copolymer were excellent, gas-barrier property of the copolymer was poor.

Comparative Example 5:

Polymerization was conducted by the same procedure as in Example 1 except for the following. The polymerization for the seed latex was identical to Example 1 but, after the completion of the seed polymerization, 0.1 part of sodium alkyl diphenyl ether disulfonate and 0.5 part of polyoxyethylene nonyl phenol ether were added and then the same compositions of the monomer mixture, the emulsifier and the initiator were continuously added in the same manner as in Example 1. The amount of the emulsifier continuously added was 55% based on the entire emulsifier. The obtained latex was coagulated with methanol and partially coagulated also with a cationic emulsifier, thus being poor in the chemical stability. Further, the extraction rate of the emulsifier with methanol from the copolymer was as much as 77%. Although the molecular weight of the copolymer was relatively high, it did not reach a level capable of sufficiently improving the light-coloring resistance.

Comparative Example 6:

A seed latex was polymerized with the same monomer mixture and by the same procedures as in Example 1.

| Potassium persulfate | 0.05 part |
|---|---|
| Sodium hydrogen sulfite | 0.03 part |
| Deionized water | 8.0 parts |

were added as an initiator to the latex.

Then, the monomer mixture of the same composition and the amount as those in Example 1 was continuously added at a rate of 5 parts per hour and, simultaneously, a mixture comprising:

```
Sodium    alkyl diphenyl ether disulfonate        0.3 part

Polyoxyethylene nonyl phenol ether               0.8 part

Deionized water                                   17 parts

was continuously added at a rate of one part per hour.
```

Then, 10 hours after the continuous charge of the monomer mixture and the emulsifier mixture was over,

| Potassium persulfate | 0.02 part |
|---|---|
| Sodium hydrogen sulfite | 0.02 part |
| Deionized water | 40 parts |

were added all at once.

After completing the initial continuous charge of the monomer (at 15th hour),

| Potassium persulfate | 0.03 part |
|---|---|
| Sodium hydrogen sulfite | 0.03 part |
| Deionized water | 6.0 parts |

were again added and the monomer mixture for the second charge was continuously added in the same manner as in Example 1. After the completion of the addition,

| Potassium persulfate | 0.02 part |
|---|---|
| Sodium hydrogen sulfite | 0.02 part |
| Deionized water | 4.0 parts were added and stirred at 45°C for further 3 hours to obtain a latex. Since no continuous addition of the polymerization initiator was conducted in this Comparative Example 6, the latex thus obtained was poor in the chemical stability and coagulated with methanol. Further, it was partially coagulated with a cationic emulsifier. Also by use of a big amount of the initiator for completing the polymerization (the polymerization yield was extremely reduced when the initiator was decreased), the molecular weight of the copolymer was rather low. Further, the light-coloring resistance was extremely poor, probably because of the high metal ion content. |

Comparative Example 7:

Polymerization was conducted in the same procedures as in Example 3 except for using 0.4 part of sodium alkyl diphenyl disulfonate instead of 0.15 part of sodium alkyl diphenyl disulfonate and 0.15 part of polyoxyethylene nonyl phenol ether in the initial charge and using 1.2 parts of sodium alkyl diphenyl disulfonate instead of 0.5 part of sodium alkyl diphenyl disulfonate and 0.75 part of polyoxyethylene nonyl phenol ether in the continuous charge. The obtained latex had poor chemical stability and inferior light-coloring resistance as compared with Example 4.

Comparative Example 8:

Polymerization was conducted in the same procedures as in Example 3 except for using 0.7 part of sodium alkyl diphenyl sulfonate and 0.9 part of polyoxyethylene nonyl phenol ether in the initial charge and not using the emulsifier in the continuous addition. The obtained latex showed a great extraction rate of emulsifier, was poor in the chemical stability and also inferior in the light-coloring resistance and the gas barrier property as compared with Example 3.

Comparative Example 9:

```
Deionized water                              80 parts

Polyoxyethylene nonyl phenol ether           2.0 parts

(Emulgen 930)

Potassium persulfate                         0.015 part

Sodium hydrogen sulfite                      0.01 part

were charged into a glass-lined autoclave equipped with a stirrer and after sufficiently replaced with nitrogen gas,

Vinylidene chloride                          9.0 parts

Methylmethacrylate                           0.7 part

Methylacrylate                               0.3 part

were added rapidly by a pump and, after stirring at 45°C

for 3 hours (seed polymerization), an aqueous 1% solution of sodium hydrogen sulfite of 6.0 parts was added and

then a mixture comprising:
```

| | |
|---|---|
| Vinylidene chloride | 82 parts |
| Methylmethacrylate | 5.5 parts |
| Acrylonitrile | 2.5 parts |

was added at a rate of 10 parts per hour and, simul taneously, 9 parts of deionized water containing 0.01 part of potassium persulfate were continuously added at a rate of one part per hour. One hour after the completion of charging the monomer mixture and an aqueous solution of the polymerization initiator, the same polymerization initiator as in the Examples was added and stirred at 45°C for three hours to obtain a latex. No rapid generation of polymerization heat was recognized even when the monomer was started to be charged continuously and the heat generation peak of the polymerization was recognized at three hours after the starting of the addition of the monomer. The chemical stability of the obtained latex to methanol was poor and the extraction rate of emulsifier was as high as 93%. While the molecular weight of the copolymer was as large as 0.068 l/g and showed favorable light-coloring resistance, but the gas barrier property was poor as compared with Example 4.

Comparative Example 10:

Polymerization was conducted in the same procedures as in Example 4 except for continuously adding

22

1.5 parts of polyoxyethylene nonyl phenol ether and 7.5 parts of water in the same manner as in Example 4 instead of continuously adding 1.5 parts of polyoxyethylene nonyl phenol ether, 0.01 part of potassium persulfate and 7.5 parts of deionized water in Example 4, and except for adding 0.02 part of potassium persulfate and 2.0 parts of water all at once upon starting and 4.5 hours after starting the continuous addition of the emulsifier. The obtained latex was instable to methanol. The extraction rate of emulsifier was as high as 78% and gas barrier property of the copolymer was inferior to that in Example 4.

Comparative Example 11:

Polymerization was conducted in the same procedures as in Example 7 except for adding 1.5 parts of polyoxyethylene phenol ether, 0.02 part of potassium persulfate and 7.5 parts of deionized water instead of 1.5 parts of polyoxyethylene nonyl phenol ether, 0.01 part of potassium persulfate and 7.5 parts of deionized water continuously. Although chemical stability of the latex was excellent, gas barrier property of the copolymer was poor.

Comparative Example 12:

Polymerization was conducted in the same procedures as in Example 8 except for an addition method of the initiator. The method and the amount of adding the initiator was the same as in Comparative Example 6. The stability of the latex was also poor as in Comparative Example 6.

When compared with Example 3, it showed reduced molecular weight and extremely poor light-colouring resistance.

When compared with Comparative Example 6, the difference can be recognised as being caused by the use of a monomer having heat and light stable effects although the amount of the initiator was identical.

The data for the Examples of this invention and Comparative Examples are collectively shown in Tables 1 (I to III). In the tables, it can be seen that in the latexes prepared by emulsion copolymerisation by continuously charging the monomer, the emulsifier and the initiator simultaneously, the non-ionic emulsifier is firmly bonded with the latex-like copolymer and latex stability can be maintained with a very small amount of the non-ionic emulsifier. As a result, since the amount of the emulsifier can be significantly reduced, the gas barrier property of the copolymer, the light-colouring resistance and the molecular weight distribution can all be improved.

Table 1 (i)

| | | Condition for the polymerization | | | | | | | | | | | | | | | Properties | | | | | | | | | Overall judgement |
|---|---|---|---|---|---|---|---|---|---|---|---|---|---|---|---|---|---|---|---|---|---|---|---|---|---|---|---|
| | | Monomer composition (%) | | | | | | Polymerization initiator | | | | Emulsifier | | | | | Chemical stability | | | Emulsifier extraction rate with methanol (%) | Molecular weight nsp/c (1/g) | Light-coloring resistance | | | Gas barrier property | |
| | | Kind of monomer | | | | | Addition method | Kind and amount of initiator added | | | Addition method | Total addition amount (part) | Continuous addition amount (part) | | Continuous addition (%) | Nonionic emulsifier content (%) | Additives | | | | | Yellow Index Sun light exposure time (Hr) | | | O2 permeability 20°C 90 %RH (cc/m² 24 Hr) | |
| | | VDC | AN | MMA | MA | AA | | KPS | t-BHP | NaHSO₃ | | | Anionic | Nonionic | | | Methanol | Cationic | Emulsifier | | | 0 | 20 | 40 | | |
| Example | 1 | 91.7 | 2.3 | 5.1 | 0.6 | 0.3 | continuous | .034 | – | .110 | continuous | 1.4 | 0.3 | 0.8 | 79 | 71 | O | | O | 45 | .047 | 12 | 18 | 24 | 3.1 | good |
| Comparative Example | 1 | 91.7 | 2.3 | 5.1 | 0.6 | 0.3 | continuous | .034 | – | .110 | continuous | 0.5 | – | – | 0 | 0 | X | | X | 99 | .035 | 15 | 32 | 40 | 3.2 | failed |
| | 2 | 91.7 | 2.3 | 5.1 | 0.6 | 0.3 | = | .034 | – | .110 | = | 3.0 | – | –* | 0 | 83 | X | | O | 98 | .035 | 21 | 36 | 46 | 12.4 | = |
| | 3 | 91.7 | 2.3 | 5.1 | 0.6 | 0.3 | = | .034 | – | .110 | = | 2.0 | – | –** | 0 | 75 | X | | X | – | – | – | – | – | – | = |
| | 4 | 91.7 | 2.3 | 5.1 | 0.6 | 0.3 | = | .034 | – | .110 | = | 3.1 | 0.3 | 2.5 | 90 | 87 | O | | O | 25 | .079 | 12 | 17 | 23 | 10.6 | = |
| | 5 | 91.7 | 2.3 | 5.1 | 0.6 | 0.3 | = | .034 | – | .110 | collective | 2.0 | 0.3 | 0.8 | 55 | 75 | X | | △ | 77 | .038 | 15 | 30 | 35 | 7.3 | = |
| | 6 | 91.7 | 2.3 | 5.1 | 0.6 | 0.3 | = | .110 | – | .110 | collective | 1.4 | 0.3 | 0.8 | 79 | 71 | X | | △ | 99 | .032 | 18 | 35 | 42 | 7.5 | = |

\* 2.5 parts of nonionic emulsifier added after the completion of polymerization
\*\* 1.5 parts of nonionic emulsifier added after the completion of polymerization

Table 1 (II)

| Condition / Property | Item | Example 2 | Example 3 | Example 4 | Example 5 | Example 6 | Comparative Example 7 | Comparative Example 8 | Comparative Example 9 | Comparative Example 10 |
|---|---|---|---|---|---|---|---|---|---|---|
| Monomer composition (%) | Kind of monomer | VDC 90.85 / MAN 0.6 / AN 4.25 / MMA 0.6 / AA 0.3 | VDC 91.0 / MMA 6.2 / AN 2.5 / MA 0.3 | VDC 91.0 / MMA 6.2 / AN 2.5 / MA 0.3 | VDC 90.7 / MMA 3.4 / AN 3.0 / GMA 2.7 | VDC 90.45 / MMA 4.55 / MAN 2.7 / AN 0.3 / GMA 2.0 | VDC 90.9 / MMA 3.4 / AN 3.0 / GMA 2.7 | VDC 90.9 / MMA 3.4 / AN 3.0 / GMA 2.7 | VDC 91.0 / MMA 6.2 / AN 2.5 / MA 0.3 | VDC 91.0 / MMA 6.2 / AN 2.5 / MA 0.3 |
| | Addition method | continuous | " | " | " | " | continuous | " | " | " |
| Polymerization initiator (kind and amount added) | KPS | .043 | .038 | .035 | .045 | .050 | .038 | .038 | .030 | .065 |
| | t-BHP | — | — | — | — | — | — | — | — | — |
| | $NaHSO_3$ | .115 | .12 | — | — | .14 | .12 | .12 | — | — |
| | Addition method | continuous | " | " | " | " | continuous | " | " | " |
| Emulsifier | Total addition amount (part) | 2.0 | 1.65 | 2.0 | 4.5 | 1.5 | 1.6 | 1.6 | 2.0 | 6.0 |
| Continuous addition amount (part) | Anionic | 0.3 | 0.5 | — | — | 0.60 | 1.2 | — | — | — |
| | Nonionic | 1.2 | 0.75 | 1.5 | 4.0 | 0.90 | — | — | — | 5.5 |
| | Continuous addition (%) | 75 | 76 | 75 | 89 | 98 | 75 | 0 | 0 | 92 |
| | Nonionic emulsifier content (%) | 75 | 61 | 100 | 100 | 60 | 0 | 56 | 100 | 100 |
| Chemical stability (Additives) | Methanol / Cationic | ○ | ○ | ○ | ○ | ○ | × | × | × | × |
| | Emulsifier | ○ | ○ | ○ | ⊙ | ○ | × | △ | ○ | ○ |
| Properties | Emulsifier extraction rate with methanol (%) | 45 | 48 | 25 | 14 | 43 | 98 | 97 | 93 | 78 |
| | Molecular weight nsp/c (1/g) | .060 | .058 | .054 | .050 | .054 | .050 | .055 | .068 | .057 |
| Light coloring resistance — Yellow Index, Sun light exposure time (Hr) | 0 | 11 | 10 | 12 | 12 | 11 | 12 | 12 | 12 | 12 |
| | 20 | 18 | 13 | 16 | 16 | 15 | 19 | 16 | 17 | 18 |
| | 40 | 23 | 16 | 20 | 20 | 19 | 26 | 22 | 21 | 23 |
| Gas barrier property | $O_2$ permeability 20°C 90%RH (cc/m² 24 Hr) | 2.4 | 4.0 | 3.4 | 4.6 | 3.4 | 3.7 | 7.5 | 4.5 | 4.3 |
| | Overall judgement | good | " | " | " | " | failed | " | " | " |

Table 1 (III)

EP 0 242 234 B1

26

| | No. | Condition for the polymerization — Monomer composition (%) Kind of monomer | Addition method | Kind and amount of initiator added: KPS | t-BHP | NaHSO₃ | Addition method | Total addition amount (part) | Continuous addition amount (part): Anionic | Nonionic | Continuous addition(%) | Nonionic emulsifier content (%) | Additives: Methanol | Cationic | Emulsifier | Emulsifier extraction rate with methanol(%) | Molecular weight nsp/c (l/g) | Yellow Index Sun light exposure time (Hr) 0 | 20 | 40 | Gas barrier property O₂ permeability 20°C 90%RH (cc/m² 24 Hr) | Overall judgement |
|---|---|---|---|---|---|---|---|---|---|---|---|---|---|---|---|---|---|---|---|---|---|---|
| Example | 7 | VDC 90  GMA 3.0  MA 7.0 | continuous | .035 | – | – | continuous | 2.0 | – | 1.5 | 75 | 100 | O | O | | 25 | .054 | 12 | 16 | 20 | 3.4 | good |
| | 8 | VDC 90  GMA 3.0  MA 7.0 | " | .034 | – | .100 | " | 1.2 | 0.2 | 1.0 | 100 | 83 | O | O | | 25 | .055 | 10 | 12 | 15 | 12 | " |
| | 9 | MMA 90  MAN 4  MA 3  3 | " | – | .030 | – | " | 3.0 | – | 2.8 | 95 | 100 | O | O | | 3 | .062 | 11 | 15 | 18 | 3.2 | " |
| | 10 | MMA 90  MAN 3.7  AN 3.0  GMA 0.6  MA 1.8  0.9 | " | .038 | – | .11 | " | 2.1 | 0.6 | 1.0 | 76 | 62 | O | O | | 47 | .063 | 10 | 15 | 19 | 3.6 | " |
| Comparative Example | 11 | GMA 3.0  MA 7.0  90 | " | .045 | – | – | continuous | 2.0 | – | – | 0 | 100 | X | O | | 93 | .068 | 12 | 17 | 21 | 4.5 | failed |
| | 12 | 90  GMA 3  MA 7 | " | .110 | – | .110 | " | 1.2 | 0.2 | 1.0 | 100 | 83 | X | Δ | | 98 | .031 | 18 | 25 | 34 | 14 | " |

Symbols used in Table 1 have the following meanings respectively :

(1) Kind of monomer

VDC : vinylidene chloride
AN : acrylonitrile
MAN : methacrylonitrile
MMA : methylmethacrylate
MA : methylacrylate
AA : acrylic acid
GMA : glycidylmethacrylate

(2) Polymerization initiator

KPS : potassium persulfate
NaHSO$_3$ : sodium hydrogen sulfite
t-BHP t-butyl hydroperoxide

(3) Emulsifier

The addition amount represents an amount added after starting the polymerization.

(4) Chemical stability

o : good (with no coagulation)
Δ : partial coagulation
x : entire coagulation
The following are registered Trademarks TAKELAC, TAKENATE, SAILLOID, ESOCARD, NEWCOL, EMULGEN and MELSOLATE

## Claims

1. A process for forming a latex of vinylidene chloride copolymer by emulsion copolymerisation in a polymerisation zone of 100 parts by weight monomer mixture comprising vinylidene chloride and copolymerisable monomer in the presence of an emulsifier system and a polymerisation initiator, characterised in that
the monomer mixture comprises 60 to 94% by weight vinylidene chloride and 6 to 40% by weight copolymerisable monomer,
the emulsifier system comprises either 0.5 to 5 pbw non-ionic emulsifier or a blend of 0.03 to 1 pbw anionic emulsifier with non-ionic emulsifier that is present in an amount that is at least 60% by weight of the blend and is from 0.1 to 1.5 pbw, and
the copolymerisation is conducted by adding at least 80% of the monomer mixture substantially continuously and substantially uniformly to the polymerisation zone, and at least 75% by weight of the emulsifier system and some or all of the initiator are added to the polymerisation zone during the said substantially continuous addition of the monomer mixture.

2. A process according to any preceding claim comprising first polymerising up to 20% by weight of the monomer mixture in the presence of up to 25% by weight of the emulsifier system and up to 30% by weight of the polymerisation initiator as a seed emulsion polymerisation, and then performing the said substantially continuous and uniform addition of at least 80% of the monomer mixture.

3. A process according to any preceding claim in which the copolymerisable monomer comprises one or more monomers selected from methylacrylate, ethylacrylate, propylacrylate, butylacrylate, 2-ethylhexylacry-Late, octylacrylate, methylmethacrylate, ethylmethacrylate, glycidylacrylate, glycidylmethacrylate, acrylonitrile, methacrylonitrile, vinyl chloride, vinyl acetate, acrylic acid, methacrylic acid and itaconic acid.

4. A process according to any preceding claim in which the copolymerisable monomer comprises one or more of acrylonitrile, methacrylonitrile, methylmethacrylate, methylacrylate and glycidylmethacrylate.

5. A process according to any preceding claim in which the monomer mixture comprises from 60 to 94% by weight of vinylidene chloride, from 0.5 to 10% by weight of methacrylonitrile or acrylonitrile, from 0.5 to 5% by weight of glycidylmethacrylate and from 0 to 25% by weight of a monomer copolymerisable therewith.

6. A process according to any preceding claim wherein the anionic emulsifier is selected from alkyl sulfate ester salt, alkylbenzene sulfonate salt, alkylnaphthalene sulfonate salt, dialkylsulfosuccinate ester salt, alkylphosphate ester salt, naphthalene sulfonic acid - formalin sulfonic acid condensate, polyoxyethylene alkyl sulfate ester salt, alkyl diphenyl ether disulfonate salt, vinyl sulfonate salt, styrene sulfonic acid, or a mixture of two or more of them.

7. A process according to claim 6 wherein the anionic emulsifier is sodium alkyldiphenyl ether disulfonate, sodium alkylsulfonate or sodium dodecyl benzene sulfonate.

8. A process according to any preceding claim wherein the non-ionic emulsifier has HLB within the range from 7 to 20.

9. A process according to any preceding claim wherein the non-ionic emulsifier is polyoxyethylene alkyl ether, polyoxyethylene alkylphenol ether, polyoxyethylene fatty acid ester, polyoxyethylene sorbitan fatty acid ester or a mixture of two or more of them.

10. A process according to any preceding claim in which the substantially continuous addition of the monomer occupies at least 50% and preferably at least 70% of the total polymerisation time.

11. A process according to any preceding claim in which the reaction mixture is post-reacted by being maintained under polymerisation conditions for at least 10% of the total polymerisation time after completion of the addition of monomer.

12. A process according to any preceding claim in which the substantially continuous addition of monomer is conducted over a period of at least eight hours and the mixture is subjected to post-reaction by being maintained under polymerisation conditions for at least two hours after the addition of the monomer.

**Patentansprüche**

1. Verfahren zur Bildung eines Latex aus Vinylidenchlorid-Copolymer durch Emulsionscopolymerisation in einer Polymerisationszone von 100 Gewichtsteilen Monomermischung, umfassend Vinylidenchlorid und ein copolymerisierbares Monomer in Gegenwart eines Emulgiersystems und eines Polymerisationsinitiators, dadurch gekennzeichnet, daß

die Monomermischung 60 bis 94 Gew.-% Vinylidenchlorid und 6 bis 40 Gew.-% copolymerisierbares Monomer umfaßt,

das Emulgiersystem entweder 0,5 bis 5 Gewichtsteile nichtionisches Emulgiermittel oder eine Mischung aus 0,03 bis 1 Gewichtsteile anionischem Emulgiermittel mit nichtionischem Emulgiermittel, das in einer Menge vorlieft, die wenigstens 60 Gew.-% der Mischung beträgt und 0,1 bis 5 Gewichtsteile ausmacht,umfaßt und die Copolymerisation durch im wesentlichen kontinuierliches und im wesentlichen gleichäßiges Zugeben von wenigstens 80 % der Monomermischung in die Polymerisationszone durchgeführt wird und wenigstens 75 Gew.-% des Emulgiersystems und ein Teil oder der gesamte Initiator der Polymerisationszone während der im wesentlichen kontinuierlichen Zugabe der Monomermischung zugegeben werden.

2. Verfahren nach Anspruch 1, bei dem zuerst bis zu 20 Gew.-% der Monomermischung in Gegenwart von bis zu 25 Gew.-% des Emulgiersystems und bis zu 30 Gew.-% des Polymerisationsinitiators als Keimemulsionspolymerisation polymerisiert werden und dann die im wesentlichen kontinuierliche und gleichmäßge Zugabe von wenigstens 80 % der Monomermischung erfolgt.

3. Verfahren nach einem der vorhergehenden Ansprüche, worin das copolymerisierbare Monomer ein oder mehrere Monomere, gewählt aus Methylacrylat, Ethylacrylat, Propylacrylat, Butylacrylat, 2-Ethylhexylacrylat, Octylacrylat, Methylmethacrylat, Ethylmethacrylat, Glycidylacrylat, Glycidylmethacrylat, Acrylnitril, Methacrylnitril, Vinylchlorid, Vinylacetat, Acrylsäure, Methacrylsäure und Itaconsäure, umfaßt.

4. Verfahren nach einem der vorhergehenden Ansprüche, worin das copolymerisierbare Monomer ein oder mehrere Monomere aus Acrylnitril, Methacrylnitril, Methylmethacrylat, Methylacrylat und Glycidylethacrylat umfaßt.

5. Verfahren nach einem der vorhergehenden Ansprüche, worin die Monomermischung 60 bis 94 Gew.-% Vinylidenchlorid, 0,5 bis 10 % Gew.-% Methacrylnitril oder Acrylnitril, 0,5 bis 5 Gew.-% Glycidylmethacrylat und 0 bis 25 Gew.-% eines damit copolymerisierbaren Monomers umfaßt.

6. Verfahren nach einem der vorhergehenden Ansprüche, worin das anionische Emulgiermittel aus Alkyl-sulfatestersalz, Alkylbenzolsulfonatsalz, Alkylnaphthalinsulfonatsalz, Dialkylsulfosuccinatestersalz, Alkylphos-phatestersalz, Naphthalinsulfonsäure-Formalinsulfonsäure-Kondensat, Polyoxyethylenalkylsulfatestersalz, Alkyldiphenyletherdisulfonatsalz, Vinylsulfonatsalz, Styrolsulfonsäure oder einer Mischung aus zwei oder mehreren davon, gewählt wird.

7. Verfahren nach Anspruch 6, worin das anionische Emulgiermittel Natriumalkyldiphenyletherdisulfonat, Natriumalkylsulfonat oder Natriumdodecylbenzolsulfonat ist.

8. Verfahren nach einem der vorhergehenden Ansprüche, worin das nichtionische Emulgiermittel einen HLB imerhalb des Bereichs von 7 bis 20 besitzt.

9. Verfahren nach einem der vorhergehenden Ansprüche, worin das nichtionische Emulgiermittel Polyoxyethylenalkylether, Polyoxyethylenalkylphenolether, Polyoxyethylenfettsäureester, Polyoxyethylensorbitanfettsäureester oder eine Mischung aus zwei oder mehreren davon ist.

10. Verfahren nach einem der vorhergehenden Ansprüche, worin die im wesentlichen kontinuierliche Zugabe des Monomers wenigstens 50 % und vorzugsweise wenigstens 70 % der gesamten Polymerisationszeit ausmacht.

11. Verfahren nach einem der vorhergehenden Ansprüche, worin die Reaktionsmischung nach der Reaktion weiter umgesetzt wird, indem sie unter Polymerisationsbedingungen über wenigstens 10 % der gesamten Polymerisationszeit nach Abschluß der Zugabe des Monomers gehalten wird.

12. Verfahren nach einem der vorhergehenden Ansprüche, worin die im wesentlichen kontinuierliche Zugabe des Monomers über einen Zeitraum von wenigstens 8 Stunden durchgeführt wird und die Mischung einer Nachreaktion ausgesetzt wird, indem sie unter Polymerisationsbedingungen über wenigstens 2 Stunden nach Zugabe des Monomers gehalten wird.

**Revendications**

1. Procédé de préparation d'un latex de copolymère du chlorure de vinylidène par copolymérisation en émulsion, dans une zone de polymérisation, de 100 parties en poids d'un mélange de monomères comprenant du chlorure de vinylidène et un monomère copolymérisable en présence d'un système émulsionnant et d'un agent d'amorçage de la polymérisation, caractérisé en ce que :

le mélange de monomères comprend 60 à 94% en poids de chlorure de vinylidène et 6 à 40% en poids de monomère copolymérisable,

le système d'émulsionnants comprend, soit 0,5 à 5 parties en poids d'émulsionnant non ionique, soit un mélange de 0,03 à 1 partie en poids d'émulsionnant anionique, l'émulsionnant non ionique étant présent dans une quantité telle qu'elle représente au moins 60% en poids du mélange et qu'elle soit de 0,1 à 1,5 partie en poids, et

la copolymérisation est effectuée en ajoutant au moins 80% du mélange de monomères d'une manière pratiquement continue et pratiquement uniforme dans la zone de polymérisation, et en ajoutant au moins 75% en poids du système d'émulsionnants et une partie ou la totalité de l'agent d'amorçage dans la zone de polymérisation au cours de cette addition pratiquement continue du mélange de monomères.

2. Procédé suivant l'une quelconque des revendications précédentes, comprenant d'abord la polymérisation d'une proportion allant jusqu'à 20% en poids du mélange de monomères en présence d'une proportion allant jusqu'à 25% en poids du système d'émulsionnants et d'une proportion allant jusqu'à 30% en poids d'un agent d'amorçage de la polymérisation sous la forme d'une polymérisation en émulsion par germe, puis l'exécution de cette addition pratiquement continue et uniforme d'au moins 80% du mélange de monomères.

3. Procédé suivant l'une quelconque des revendications précédentes, dans lequel le monomère copolymérisable comprend un ou plusieurs monomères choisis parmi l'acrylate de méthyle, l'acrylate d'éthyle, l'acrylate de propyle, l'acrylate de butyle, l'acrylate de 2-éthylhexyle, l'acrylate d'octyle, le méthacrylate de méthyle, le méthacrylate d'éthyle, l'acrylate de glycidyle, le méthacrylate de glycidyle, l'acrylonitrile, le méthacrylonitrile, le chlorure de vinyle, l'acétate de vinyle, l'acide acrylique, l'acide méthacrylique et l'acide itaconique.

4. Procédé suivant l'une quelconque des revendications précédentes, dans lequel le monomère copolymérisable comprend un ou plusieurs des monomères suivants : acrylonitrile, méthacrylonitrile, méthacrylate de méthyle, acrylate de méthyle et méthacrylate de glycidyle.

5. Procédé suivant l'une quelconque des revendications précédentes, dans lequel le mélange de monomères comprend de 60 à 94% en poids de chlorure de vinylidène, de 0,5 à 10% en poids de méthacrylonitrile ou d'acrylonitrile, de 0,5 à 5% en poids de méthacrylate de glycidyle et de 0 à 25% en poids d'un monomère copolymérisable avec ceux-ci.

6. Procédé suivant l'une quelconque des revendications précédentes, dans lequel l'émulsionnant anionique est choisi parmi un sulfate d'alkyle, un sel d'ester, un sel d'alkylbenzène sulfonate, un sel d'alkylnaphtalène sulfonate, un sel de dialkylsulfosuccinate, un sel d'ester alkylphosphorique, un condensat acide naphtalène sulfonique-acide formaldéhyde sulfonique, un sel d'ester polyoxyéthylènealkyl sulfurique, un sel de disulfonate d'éther alkyl diphénylique, un sel de sulfonate vinylique, l'acide styrène sulfonique ou un mélange de plusieurs de ceux-ci.

7. Procédé suivant la revendication 6, dans lequel l'émulsionnant anionique est un (éther alkyl diphénylique) disulfonate de sodium, un alkyl sulfonate de sodium ou le dodécylbenzène sulfonate de sodium.

8. Procédé suivant l'une quelconque des revendications précédentes, dans lequel l'émulsionnant non ionique a un équilibre hydrophile-lipophile dans l'intervalle de 7 à 20.

9. Procédé suivant l'une quelconque des revendications précédentes, dans lequel l'émulsionnant non ionique est un éther polyoxyéthylène alkylique, un éther de polyéthylène alkylphénol, un ester d'acide gras polyoxyéthyléné, un ester d'acide gras du polyoxyéthylène sorbitane ou un mélange de plusieurs de ceux-ci.

10. Procédé suivant l'une quelconque des revendications précédentes, dans lequel l'addition pratiquement continue du monomère occupe au moins 50%, et de préférence au moins 70% du temps total de polymérisation.

11. Procédé suivant l'une quelconque des revendications précédentes, dans lequel le mélange réactionnel est soumis à une post-réaction en étant maintenu dans des conditions de polymérisation pendant au moins 10% du temps total de polymérisation après la fin de l'addition du monomère.

12. Procédé suivant l'une quelconque des revendications précédentes, dans lequel l'addition pratiquement continue de monomère est effectuée sur une durée d'au moins 8 heures et le mélange est soumis à une post-réaction en étant maintenu dans des conditions de polymérisation pendant au moins deux heures après l'addition du monomère.